# EUROPEAN PATENT APPLICATION

(11) **EP 4 418 410 A1**
(43) Date of publication of application: **21.08.2024**
(21) Application number: 22929294.1
(22) Date of filing: 02.03.2022
(51) Int. Cl.: H01M 10/65, H01M 10/6556, H01M 10/6568

(54) **BATTERY, ELECTRIC DEVICE, AND MANUFACTURING METHOD AND MANUFACTURING DEVICE FOR BATTERY**

(71) Applicant: Contemporary Amperex Technology Co., Limited, Ningde, Fujian 352100 (CN)
(72) Inventor: ZHOU, Cong, Ningde City Fujian 352100 (CN); HOU, Yuepan, Ningde City Fujian 352100 (CN); HUANG, Xiaoteng, Ningde City Fujian 352100 (CN)
(74) Representative: Thoma, Michael
(86) International application number: PCT/CN2022/078871
(87) International publication number: WO 2023/164843

(57) **Abstract**

The present application relates to a battery, an electrical device, and a manufacturing method and device for a battery. The battery includes: at least one battery cell; a first thermal management component and a second thermal management component configured for accommodating fluid to adjust the temperature of the at least one battery cell; a first pipe connector, with one end connected to the first thermal management component; a second pipe connector, with one end connected to the second thermal management component; and a flexible pipe including a first end portion and a second end portion, where the first end portion is connected to the other end of the first pipe connector, and the second end portion is connected to the other end of the second pipe connector, so as to connect the first thermal management component and the second thermal management component. Compared with existing technologies, a connection structure is simplified, the first thermal management component and the second thermal management component are connected by the simple structure, and the overall structure is compact.

## Description

### Technical Field

The present application relates to the field of battery technology, and in particular, to a battery, an electrical device, and a manufacturing method and manufacturing device for a battery.

### Background Art

In the big environment of pursuing energy conservation and emission reduction, batteries are widely used in electrical devices such as mobile phones, computers, and electric vehicles to provide electrical energy. With the development of technology, structures of batteries are required to develop towards a simpler and more compact direction. The battery includes a thermal management component with a relatively complex connection structure, which is inconvenient to connect and occupies a lot of space in the narrow battery.

### Summary

The present application aims to provide a battery, an electrical device, and a manufacturing method and manufacturing device for a battery to simplify the structure of the battery.

Embodiments of the present application are implemented as follows:

First, an embodiment of the present application provides a battery, including: at least one battery cell; a first thermal management component and a second thermal management component configured for accommodating fluid to adjust the temperature of the at least one battery cell; a first pipe connector, with one end connected to the first thermal management component; a second pipe connector, with one end connected to the second thermal management component; and a flexible pipe including a first end portion and a second end portion, the first end portion is connected to the other end of the first pipe connector, and the second end portion is connected to the other end of the second pipe connector, so as to connect the first thermal management component and the second thermal management component.

In this technical solution of the present application, the first thermal management component and the second thermal management component are connected through the first pipe connector, the flexible pipe, and the second pipe connector, which reduces connectors compared with existing technologies, where the connection structure is simple, compact, and easy to mount, remove, and maintain, the first thermal management component and the second thermal management component are arranged and connected inside the narrow battery, and the structure of the battery is enabled to be simpler and more compact.

In an embodiment of the present application, the first end portion is sheathed on the first pipe connector and is in interference fit with the first pipe connector.

In the foregoing technical solution, the first end portion of the flexible pipe is in interference fit with the first pipe connector, which facilitates assembly of the first pipe connector and the first end portion in place and improves connection stability.

In an embodiment of the present application, an annular protrusion extending along a circumferential direction of the first pipe connector is disposed on an outer circumferential surface of the first pipe connector, and the annular protrusion abuts against an inner wall of the flexible pipe.

In the foregoing technical solution, the first end portion not only covers a surface of the first pipe connector to achieve the interference fit with the first pipe connector, but also has great deformation at the annular protrusion to form an annular sealing line, so as to improve connection strength and sealing effect.

In an embodiment of the present application, an outer diameter of the annular protrusion gradually decreases in a direction from the first thermal management component to the second thermal management component.

In the foregoing technical solution, the outer circumferential surface of the annular protrusion forms a conical surface to guide the first end portion of the flexible pipe to be sheathed on the first pipe connector, which facilitates connection without separation, facilitates mounting, and avoids accidental falling.

In an embodiment of the present application, a plurality of annular protrusions are disposed on the outer circumferential surface of the first pipe connector, and the plurality of annular protrusions are spaced in an axial direction of the first pipe connector.

In the foregoing technical solution, a plurality of annular sealing lines are formed between the flexible pipe and the first pipe connector through the plurality of annular protrusions to further improve the sealing effect.

In an embodiment of the present application, the battery further includes: a first sealing ring sheathed on the first pipe connector to seal a gap between the outer circumferential surface of the first pipe connector and the inner wall of the flexible pipe.

In the foregoing technical solution, the inner wall of the flexible pipe cooperates with the outer circumferential surface of the first pipe connector to squeeze the first sealing ring, and the first sealing ring seals the gap between the inner wall of the flexible pipe and the outer circumferential surface of the first pipe connector to further improve the sealing effect.

In an embodiment of the present application, a stop portion is further disposed on the outer circumferential surface of the first pipe connector, and the first sealing ring is located between the annular protrusion and the stop portion to limit axial movement of the first sealing ring along the first pipe connector.

In the foregoing technical solution, the stop portion prevents the axial movement or deformation of the first sealing ring along the first pipe connector, and ensures sealing performance between the first pipe connector and the flexible pipe.

In an embodiment of the present application, the plurality of annular protrusions include a first annular protrusion and a second annular protrusion, and the distance between the first annular protrusion and the first thermal management component is greater than that between the second annular protrusion and the first thermal management component; and the stop portion is located between the first annular protrusion and the second annular protrusion.

In the foregoing technical solution, the first sealing ring is limited between the first annular protrusion and the stop portion, and the stop portion is located at a position relatively far away from the first thermal management component in the axial direction of the first pipe connector, thereby preventing reduction of the sealing performance due to inadequate sheathing of the first end portion of the flexible pipe.

In an embodiment of the present application, the first thermal management component includes a first wall, the first wall is provided with a first through hole, and the first pipe connector is welded to the first wall and is in communication with the first through hole.

Compared with the existing technologies in which a male connector is disposed on the first thermal management component which is then connected to a pipe through a female connector, the first wall is provided with the first through hole and the first pipe connector connected to the flexible pipe is inserted and fixed in the first through hole in the foregoing technical solution, whereby the structure of the first thermal management component is simplified, and the first thermal management component and the second thermal management component can be connected inside the narrow battery.

In an embodiment of the present application, the second thermal management component includes a second wall, the second wall is provided with a second through hole, and the second pipe connector is detachably connected to the second wall and is in communication with the second through hole.

Compared with the existing technologies in which a male connector is disposed on the second thermal management component which is then connected to a pipe through a female connector, the second wall is provided with the second through hole and the second pipe connector connected to the flexible pipe is inserted and fixed in the second through hole in the foregoing technical solution, whereby the structure of the second thermal management component is simplified, and the first thermal management component and the second thermal management component can be connected inside the narrow battery.

In an embodiment of the present application, a buckle is disposed at one end of the second pipe connector, and the buckle is clamped to an inner surface of the second wall to limit the second pipe connector from detaching from the second wall.

In the foregoing technical solution, the buckle limits the second pipe connector from detaching from the second wall, ensures stable connection between the second thermal management component and the second pipe connector, and then ensures that the flexible pipe is in a stable state, so that the flexible pipe and the first pipe connector are connected stably.

In an embodiment of the present application, the second pipe connector includes a body and a plurality of connecting arms, the body abuts against an outer surface of the second wall, the body has a third through hole in communication with the second through hole, the plurality of connecting arms are located inside the second through hole and spaced along a circumferential direction of the second through hole, one end of each connecting arm is connected to the body, and the other end of each connecting arm is provided with the buckle.

In the foregoing technical solution, the second pipe connector includes the body and the plurality of connecting arms, and the plurality of connecting arms can be inserted in the second through hole to connect the body and the second wall and connect the second through hole and the third through hole. The plurality of connecting arms are inserted inside the second through hole, so that the buckles located on the connecting arms fit with the inner surface of the second wall to achieve a limiting effect, prevent the connecting arms from detaching from the second through hole, and ensure the stability of connection between the second pipe connector and the second thermal management component. On the other hand, the plurality of connecting arms can further converge towards the center to facilitate the insertion into or exit from the second through hole, so as to facilitate the assembly and disassembly of the second pipe connector.

In an embodiment of the present application, a limit groove is further disposed on the second wall, the limit groove is recessed from a wall of the second through hole towards a direction away from a centerline of the second through hole, the connecting arm is further provided with a limit protrusion, and the limit protrusion is embedded in the limit groove to limit circumferential rotation of the second pipe connector.

In the foregoing technical solution, the limit protrusion and the limit groove prevent the circumferential rotation of the second pipe connector within the second through hole, avoid loosening the connection between the flexible pipe and the second pipe connector, avoid poor circulation caused by torsion of the flexible pipe, and prevent the connection between the flexible pipe and the first pipe connector from loosening due to the torsion of the flexible pipe, thereby improving the stability of connection between the first thermal management component and the second thermal management component.

In an embodiment of the present application, the limit protrusion includes a stop surface and a guide slope, the stop surface is configured to cooperate with the limit groove to limit rotation of the second pipe connector in a first direction, and the guide slope is configured to allow the second pipe connector to rotate in a second direction, so that the connecting arm is squeezed by the wall of the second through hole to deform, and the buckle detaches from the second wall, wherein the first direction and the second direction are opposite directions along the circumferential direction of the second pipe connector.

In the foregoing technical solution, the stop surface and the guide slope are disposed on the limit protrusion, so that the second pipe connector will not rotate freely, and when external force of a magnitude is applied to the second pipe connector and the second pipe connector rotates towards the second direction, the plurality of connecting arms can converge towards the center by squeezing the guide slopes, then the buckle on the connecting arm detaches from the second wall, the second pipe connector can be pulled out along its axis, and the second pipe connector can be conveniently disassembled.

In an embodiment of the present application, the second pipe connector further includes a sleeve portion, the sleeve portion extends from the body towards a direction away from the second wall, and the second end portion is inserted into the sleeve portion.

In the foregoing technical solution, the sleeve portion is disposed on the second surface to facilitate connection with the flexible pipe, and the sleeve portion is located outside the flexible pipe, rather than inside the flexible pipe, to protect the second end portion and prevent damage to a junction of the flexible pipe and the second pipe connector.

In an embodiment of the present application, the sleeve portion is coaxial with the third through hole, an inner diameter of the sleeve portion is greater than a diameter of the third through hole, and an end surface of the second end portion abuts against a side, away from the second wall, of the body.

In the foregoing technical solution, through the above settings, the positioning accuracy of the flexible pipe is improved, and the end surface of the second end portion will not block flowing of the heat exchange medium, so as to avoid reducing the flow rate of the heat exchange medium and improve the heat exchange efficiency.

In an embodiment of the present application, the sleeve portion and the second end portion are welded.

In the foregoing technical solution, by welding the sleeve portion and the second end portion, the connection stability of the second pipe connector and the second end portion can be improved, the gap between the inner circumferential surface of the sleeve portion and the outer circumferential surface of the second end portion can be sealed, and connection sealing performance of the second pipe connector and the second end portion can be improved.

In an embodiment of the present application, the battery further includes: a second sealing ring, where the second sealing ring is located between the body and the second wall, and the second sealing ring is configured for sealing a gap between the body and the second wall.

In the foregoing technical solution, the second sealing ring is disposed to close the gap between the body and the second wall, which improves the sealing performance of the second pipe connector and the second thermal management component.

In an embodiment of the present application, the body has a first surface facing the second wall, an annular groove is provided on the first surface, and the second sealing ring is disposed in the annular groove; and a plurality of convex portions are provided on an inner and/or outer circumferential surface of the second sealing ring, and the plurality of convex portions are spaced along a circumferential direction of the second sealing ring to ensure interference fit between the second sealing ring and the annular groove.

In the foregoing technical solution, by configuring the plurality of convex portions to achieve the interference fit between the second sealing ring and the annular groove, on the one hand, the position of the second sealing ring is fixed and not easily misaligned; on the other hand, the second sealing ring can be first assembled on the body and then abuts against the second wall to facilitate the assembly; and on the further hand, the second sealing ring can be squeezed by the second wall to deform, which facilitates the assembly of the second pipe connector and the second heat management component and achieves sealing.

In an embodiment of the present application, the first thermal management component and the second thermal management component are disposed opposite on two sides of the at least one battery cell.

In the foregoing technical solution, the first thermal management component and the second thermal management component are disposed opposite on the two sides of the battery cell to effectively increase the heat exchange area of the battery cell.

In an embodiment of the present application, the battery cell includes a first side surface and a second side surface that are opposite, the first side surface and the second side surface are surfaces of two sides of the battery cell with the largest area, the first side surface is in contact with the first thermal management component, and the second side surface is in contact with the second thermal management component.

In the foregoing technical solution, the first thermal management component and the second thermal management component are attached to the large surfaces of the battery cell separately, so that the temperature adjustment of each portion of the battery cell tends to be the same to ensure a balanced internal temperature of the battery cell, thereby improving the performance and safety of the battery cell.

In a second aspect, an embodiment of the present application provides an electrical device, including the foregoing battery.

In the foregoing technical solution, the battery of the electrical device has good heat dissipation and low temperature rise during operation, so the battery has stable performance and high safety, and the performance of the electrical device is stable.

In a third aspect, an embodiment of the present application provides a manufacturing method for a battery, including:
providing at least one battery cell;
providing a first thermal management component and a second thermal management component, where both the first thermal management component and the second thermal management component are configured for accommodating fluid to adjust the temperature of the at least one battery cell;
providing a first pipe connector;
providing a second pipe connector;
providing a flexible pipe, where the flexible pipe includes a first end portion and a second end portion; and
disposing the first thermal management component and the second thermal management component opposite on two sides of the battery cell, connecting one end of the first pipe connector to the first thermal management component, connecting one end of the second pipe connector to the second end portion, connecting the first end portion to the other end of the first pipe connector, and connecting the other end of the second pipe connector to the second thermal management component, so as to connect the first thermal management component and the second thermal management component.

In a fourth aspect, an embodiment of the present application provides a manufacturing device for a battery, including:
a first provision apparatus, configured to provide at least one battery cell;
a second provision apparatus, configured to provide a first thermal management component and a second thermal management component, where both the first thermal management component and the second thermal management component are configured for accommodating fluid to adjust the temperature of the at least one battery cell;
a third provision apparatus, configured to provide a first pipe connector;
a fourth provision apparatus, configured to provide a second pipe connector;
a fifth provision apparatus, configured to provide a flexible pipe, where the flexible pipe includes a first end portion and a second end portion; and
an assembly apparatus, configured to dispose the first thermal management component and the second thermal management component opposite on two sides of the battery cell, connect one end of the first pipe connector to the first thermal management component, connect one end of the second pipe connector to the second end portion, connect the first end portion to the other end of the first pipe connector, and connect the other end of the second pipe connector to the second thermal management component, so as to connect the first thermal management component and the second thermal management component.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle according to an embodiment of the present application;
FIG. 2 is an exploded schematic diagram of a battery according to an embodiment of the present application;
FIG. 3 is a partial schematic diagram of the battery according to an embodiment of the present application;
FIG. 4 is a partial exploded view of the battery according to an embodiment of the present application;
FIG. 5 is a schematic diagram of a connection structure between a first thermal management component and a second thermal management component according to an embodiment of the present application;
FIG. 6 is an exploded view of the connection structure between the first thermal management component and the second thermal management component according to an embodiment of the present application;
FIG. 7 is a cross-sectional view of the first thermal management component and the second thermal management component according to an embodiment of the present application;
FIG. 8 is a three-dimensional diagram of a first pipe connector according to an embodiment of the present application;
FIG. 9 is a schematic diagram of a first surface of a second pipe connector according to an embodiment of the present application;
FIG. 10 is a side view of the second pipe connector according to an embodiment of the present application;
FIG. 11 is a schematic diagram of a second wall of the second thermal management component according to an embodiment of the present application;
FIG. 12 is a schematic diagram of the second pipe connector connected to the second wall according to an embodiment of the present application;
FIG. 13 is a schematic diagram of a sleeve portion of the second pipe connector according to an embodiment of the present application;
FIG. 14 is a diagram showing a connection state between the second pipe connector and a flexible pipe according to an embodiment of the present application;
FIG. 15 is a schematic diagram of a second sealing ring according to an embodiment of the present application;
FIG. 16 is a schematic flowchart of a manufacturing method for a battery according to an embodiment of the present application; and
FIG. 17 is a schematic block diagram of a manufacturing device for a battery according to an embodiment of the present application.

Reference numerals: 1000 - vehicle; 100 - battery; 1 - box; 11 - first box portion; 12 - second box portion; 2 - battery cell; 3 - thermal management component; 31 - first thermal management component; 311 - first wall; 312 - first through hole; 32 - second thermal management component; 321 - second wall; 322 - second through hole; 323 - limit groove; 4 - first pipe connector; 41 - annular protrusion; 41a - first annular protrusion; 41b - second annular protrusion; 42 - stop portion; 5 - second pipe connector; 51 - body; 511 - third through hole; 512 - first surface; 513 - annular groove; 52 - connecting arm; 53 - buckle; 54 - limit protrusion; 541 - stop surface; 542 - guide slope; 55 - sleeve portion; 6 - flexible pipe; 61 - first end portion; 62 - second end portion; 7 - first sealing ring; 8 - second sealing ring; 81 - convex portion; 82 - convex ring; 200 - motor; 300 - controller; 400 - manufacturing device; 410 - first provision apparatus; 420 - second provision apparatus; 430 - third provision apparatus; 440 - fourth provision apparatus; 450 - fifth provision apparatus; 460 - assembly apparatus.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase appearing in various places of the description does not necessarily refers to the same embodiment, nor is an independent or alternative embodiment mutually exclusive with other embodiments.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists, both A and B exist, and B exists. In addition, the character "/" in this application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

The battery mentioned in the embodiments of the present application refers to a single physical module that includes one or more battery cells to provide higher voltage and capacity. The battery generally includes a box configured for packaging one or more battery cells. The box may prevent liquid or other foreign matters from affecting charging or discharging of the battery cells.

The battery cells mentioned in the embodiments of the present application include lithium-ion secondary battery cells, lithium-ion primary battery cells, lithium-sulfur battery cells, sodium lithium ion battery cells, sodium-ion battery cells, magnesium-ion battery cells, or the like, which are not limited by the embodiments of the present application.

Each battery cell includes an electrode assembly and an electrolyte, where the electrode assembly includes a positive electrode sheet, a negative electrode sheet, and a separator. The battery cell mainly relies on movement of metal ions between the positive electrode sheet and the negative electrode sheet to work. The positive electrode sheet includes a positive electrode current collector and a positive electrode active material layer, and a surface of the positive electrode current collector is coated with the positive electrode active material layer; and the positive electrode current collector includes a positive electrode current collecting portion and a positive electrode tab protruding from the positive electrode current collecting portion, the positive electrode current collecting portion is coated with the positive electrode active material layer, and at least a portion of the positive electrode tab is not coated with the positive electrode active material layer. Taking a lithium-ion battery as an example, a material for the positive electrode current collector may be aluminum, the positive electrode active material layer includes a positive electrode active material, and the positive electrode active material may be lithium cobalate, lithium iron phosphate, ternary lithium, lithium manganate, or the like. The negative electrode sheet includes a negative electrode current collector and a negative electrode active material layer, and a surface of the negative electrode current collector is coated with the negative electrode active material layer; and the negative electrode current collector includes a negative electrode current collecting portion and a negative electrode tab protruding from the negative electrode current collecting portion, the negative electrode current collecting portion is coated with the negative electrode active material layer, and at least a portion of the negative electrode tab is not coated with the negative electrode active material layer. A material for the negative electrode current collector may be copper, the negative electrode active material layer includes a negative electrode active material, and the negative electrode active material may be carbon, silicon, or the like. A material for the separator may be polypropylene (PP), polyethylene (PE), or the like.

The development of battery technology should consider many design factors simultaneously, such as energy density, cycle life, discharge capacity, charge and discharge rate, and other performance parameters. Appropriate environmental temperature is one of the keys to ensure good performance of the battery. When the temperature of the battery cell is too low, the movement of metal ions in the battery cell is slower, and the ability of metal ions to embed into the electrode sheet is lower, resulting in lower charge and discharge capacity. However, when the temperature of the battery cell is too high, thermal runaway easily occurs, resulting in safety hazards such as bulge and explosion.

Therefore, the battery generally further includes a thermal management component. The thermal management component is configured for accommodating fluid to adjust the temperature of a plurality of battery cells, so as to keep the battery within an appropriate temperature range and ensure good performance (such as charge and discharge capacity of the battery). The fluid here may be liquid or gas, adjusting the temperature refers to heating or cooling the plurality of battery cells, and the fluid may be referred to as a heat exchange medium. In the case of cooling the battery cells, the thermal management component is configured for accommodating cooling fluid to reduce the temperature of the plurality of battery cells. In this case, the thermal management component may alternatively be referred to as a cooling component, a cooling system, a cooling plate, or the like, and the accommodated fluid may alternatively be referred to as a cooling medium or cooling fluid, and more specifically referred to as cooling liquid or cooling gas. In addition, the thermal management component can also be configured for heating the plurality of battery cells, which is not limited by the embodiments of the present application. Optionally, the fluid may circulate to achieve a better temperature effect. Optionally, the fluid may be water, a mixture of water and ethylene glycol, air, or the like.

In related technologies, each thermal management component in the battery is provided with a male connector, and two adjacent thermal management components are connected by a pipe with female connectors at two ends, so the connection structure is complex, is inconvenient to connect in a narrow battery, and occupies a lot of space.

In view of this, in order to simplify the connection structure of the thermal management component and improve the compactness of the overall structure of the battery, an embodiment of the present application provides a battery, which includes a first thermal management component, a second thermal management component, a first pipe connector, a second pipe connector, and a flexible pipe, where one end of the first pipe connector is connected to the first thermal management component, one end of the second pipe connector is connected to the second thermal management component, the flexible pipe includes a first end portion and a second end portion, the first end portion is connected to the other end of the first pipe connector, and the second end portion is connected to the other end of the second pipe connector, that is, after the first thermal management component, a battery cell, and the second thermal management component are arranged in sequence, the first thermal management component and the second thermal management component are connected through the first pipe connector, the second pipe connector, and the flexible pipe, so compared with the existing technologies, connection joints are reduced, the connection structure is simple, compact, and easy to mount, remove and maintain, the first thermal management component and the second thermal management component are arranged and connected inside the narrow battery, and the structure of the battery is simpler and more compact.

The technical solutions described in the embodiments of the present application are applicable to all kinds of batteries, such as lithium-ion secondary batteries, lithium-ion primary batteries, lithium-sulfur batteries, sodium lithium ion batteries, sodium-ion battery, or magnesium-ion batteries. The battery cell configured for forming the battery may be cylindrical, flat, cuboid, or in other shapes.

The battery in the technical solutions described in the embodiments of the present application is suitable for various electrical devices using batteries, such as ships, vehicles, and unmanned aerial vehicles. The vehicles are new energy vehicles, which may be battery electric vehicles, hybrid vehicles, or extended-range vehicles. A body of the vehicle is equipped with a driving motor, which serves as a power source and is electrically connected to the battery. The battery provides electrical energy, and the driving motor is connected to wheels on the body of the vehicle through a transmission mechanism, so as to drive the vehicle forward. In addition, the battery may also be used in an energy storage cabinet to provide electrical energy as a power supply.

It should be understood that the technical solutions described in the embodiments of the present application are not only applicable to the devices described above, but also applicable to all devices using batteries. However, for brief description, the following embodiments are all described by an example of an electric vehicle.

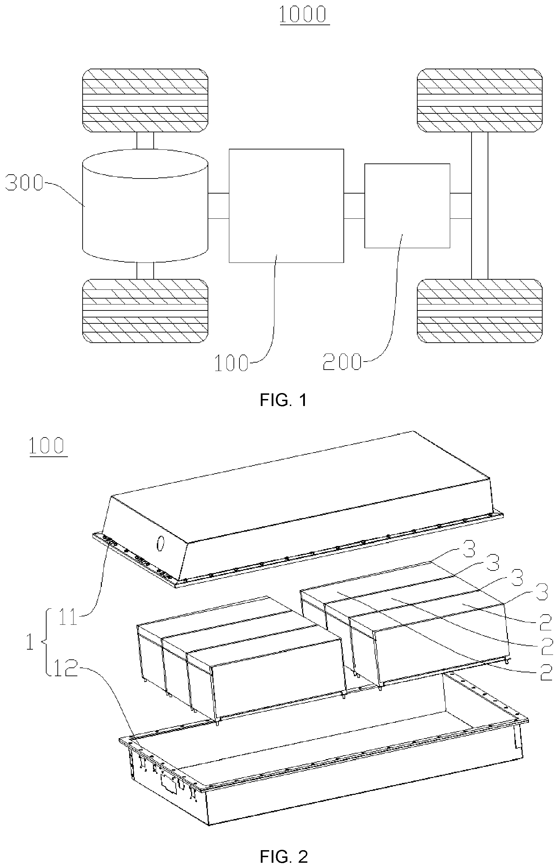

For example, FIG. 1 shows a schematic structural diagram of a vehicle 1000 according to an embodiment of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. For example, the battery 100 may be disposed at the bottom, head or tail of the vehicle 1000. The battery 100 may be configured to supply power to the vehicle 1000. For example, the battery 100 may be used as an operation power supply of the vehicle 1000 and is configured for a circuit system of the vehicle 1000, for example, for a working power demand of the vehicle 1000 during startup, navigation and running. In another embodiment of the present application, the battery 100 may serve not only as an operation power supply of the vehicle 1000, but also as a driving power supply of the vehicle 1000, replacing or partially replacing fuel or natural gas to provide driving power for the vehicle 1000.

A controller 300 and a motor 200 may also be provided inside the vehicle 1000. The controller 300 is configured to control the battery 100 to supply power to the motor 200, for example, for the working power demand of the vehicle 1000 during startup, navigation and running.

In order to meet different power requirements, the battery 100 may include a plurality of battery cells 2, where the plurality of battery cells 2 may be in series connection, parallel connection or series-parallel connection. The series-parallel connection refers to a combination of series connection and parallel connection. In some embodiments, the plurality of battery cells 2 may first be connected in series or in parallel or in a hybrid manner to form battery modules, and then a plurality of battery modules are connected in series or in parallel or in a hybrid manner.

As shown in FIG. 2, the battery 100 includes a plurality of battery cells 2 and a box 1. The box 1 forms a space for accommodating the plurality of battery cells 2, so that the plurality of battery cells 2 are arranged in the space of the box 1. The box 1 is not limited for its type, and may be a frame-like box 1, a disc-like box 1, a cassette-like box 1, or the like.

Specifically, the box 1 may include two portions for accommodating, referred to as a first box portion 11 and a second box portion 12 separately. The first box portion 11 and the second box portion 12 are buckled together. Shapes of the first box portion 11 and the second box portion 12 may be determined by a shape of a combination of the plurality of battery cells 2, and both the first box portion 11 and the second box portion 12 may have an opening. For example, both the first box portion 11 and the second box portion 12 may be a hollow cuboid and each has only one open surface. The opening of the first box portion 11 is opposite to the opening of the second box portion 12, and the first box portion 11 and the second box portion 12 are buckled together to form the box 1 with a closed chamber. Alternatively, the first box portion 11 and the second box portion 12 may be either a cuboid with an opening or a cover plate structure to close the opening of the cuboid. The plurality of battery cells 2 are connected in parallel or in series or in a hybrid manner and then placed inside the box 1 formed after the first box portion 11 and the second box portion 12 are buckled.

The plurality of battery cells 2 are connected in parallel or in series or in a hybrid manner and then placed inside the box 1. The battery 100 further includes a current collecting component (not shown), which is configured to implement electrical connection between the plurality of battery cells 2, such as parallel, series, or hybrid connection.

In this embodiment, square battery cells 2 are used as an example. As shown in FIG. 2, the plurality of battery cells 2 are sequentially stacked in their thickness direction, connected in parallel or in series or in a hybrid manner through the current collecting component, and then placed inside the box 1 A thermal management component 3 is provided on each of two sides of each battery cell 2 in the thickness direction, a first pipe connector 4 is provided on a surface of one side of each thermal management component 3, a second pipe connector 5 is provided on a surface of the other side, the two adjacent thermal management components 3 are connected through a flexible pipe 6, and the thermal management components 3 located at the head and tail of the arrangement direction are connected to a power apparatus outside the battery 100 separately to achieve flowing of a heat exchange medium.

The plurality of battery cells 2 in the battery 100 refer to one or more battery cells 2, and the plurality of thermal management components 3 refer to two or more thermal management components 3.

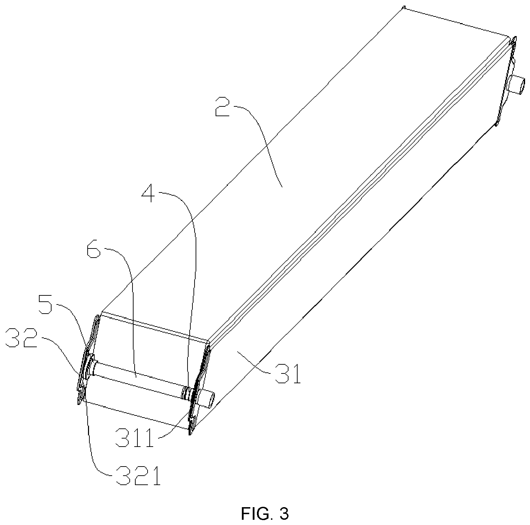

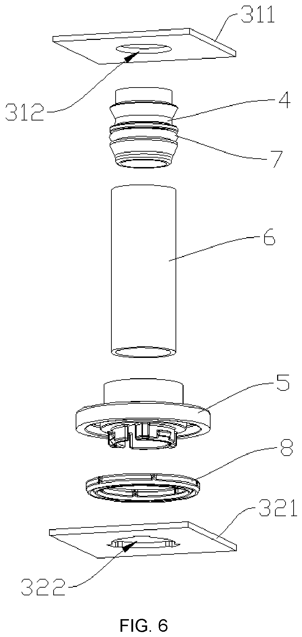

For example, the battery 100 has a battery cell 2. As shown in FIGs. 3, 4, 5, and 6, the battery 100 includes at least one battery cell 2, a first thermal management component, a second thermal management component 32, a first pipe connector 4, a second pipe connector 5, and a flexible pipe 6, where both the first thermal management component 31 and the second thermal management component 32 are configured for accommodating fluid to adjust the temperature of the battery cell 2, and one end of the first pipe connector 4 is connected to the first thermal management component 31; one end of the second pipe connector 5 is connected to the second thermal management component 32; the flexible pipe 6 includes a first end portion 61 and a second end portion 62, the first end portion 61 is connected to the other end of the first pipe connector 4, and the second end portion 62 is connected to the other end of the second pipe connector 5 to connect the first thermal management component 31 and the second thermal management component 32.

The flexible pipe 6 is made of a material with some toughness, such as polyethylene, polypropylene, rubber, or a PVC steel wire pipe (a pipe made of a polyvinyl chloride material with sandwiched steel wires), so that the flexible pipe 6 can be supported between the first pipe connector 4 and the second pipe connector 5 to prevent falling.

This technical solution of the present application reduces connection structures compared with the existing technologies, and achieves a simple and compact connection structure that is easy to mount, remove, and maintain. Through a simple structure, the first thermal management component 31 and the second thermal management component 32 are connected in a narrow space, so that the overall structure of the battery 100 is compact.

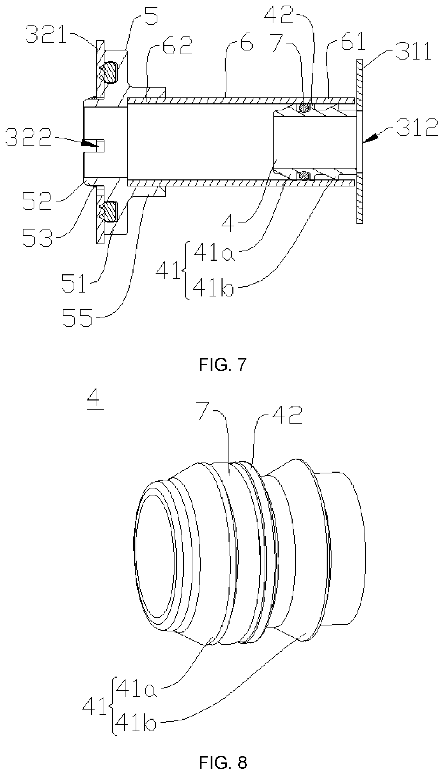

According to some embodiments of the present application, as shown in FIG. 7, the first end portion 61 is sheathed on the first pipe connector 4 and is in interference fit with the first pipe connector.

The flexible pipe is made of a material with some toughness, and the size of the first pipe connector 4 is slightly larger than the inner diameter of the first end portion 61 to achieve the interference fit.

The first end portion 61 of the flexible pipe 6 is in interference fit with the first pipe connector 4, which facilitates assembly of the first pipe connector and the first end portion in place and improves connection stability.

According to some embodiments of the present application, as shown in FIGs. 7 and 8, an annular protrusion 41 extending along a circumferential direction of the first pipe connector 4 is disposed on an outer circumferential surface of the first pipe connector 4, and the annular protrusion 41 abuts against an inner wall of the flexible pipe 6.

The outer diameter of the first pipe connector is large at a position with the annular protrusion 41, while the outer diameter of the first pipe connector 4 is small at a position without the annular protrusion 41.

The first end portion 61 not only covers a surface of the first pipe connector 4 to achieve the interference fit with the first pipe connector 4, but also has great deformation at the annular protrusion 41 to form an annular sealing line, so as to improve connection strength and sealing effect.

According to some embodiments of the present application, as shown in FIG. 7, the outer diameter of the annular protrusion 41 gradually decreases in a direction from the first thermal management component 31 to the second thermal management component 32.

The outer diameter of the annular protrusion gradually decreases, an outer circumferential surface of the annular protrusion 41 is a conical surface, and a smaller end of the cone points the second thermal management component 32.

The outer circumferential surface of the annular protrusion 41 forms the conical surface to guide the first end portion 61 of the flexible pipe 6 to be sheathed on the first pipe connector 4, which facilitates connection without separation, facilitates mounting, and avoids accidental falling.

According to some embodiments of the present application, as shown in FIGs. 7 and 8, a plurality of annular protrusions 41 are disposed on the outer circumferential surface of the first pipe connector, and the plurality of annular protrusions 41 are spaced in an axial direction of the first pipe connector 4.

The axial direction of the first pipe connector 4 refers to a direction in which an axis of the first pipe connector 4 is located, namely, a direction perpendicular to a surface of the first thermal management component 31.

Through the plurality of annular protrusions 41, a plurality of annular sealing lines are formed between the flexible pipe 6 and the first pipe connector 4 to further improve the sealing effect.

According to some embodiments of the present application, as shown in FIG. 7, the thermal management apparatus further includes a first sealing ring 7, and the first sealing ring 7 is sheathed on the first pipe connector 4 to seal a gap between the outer circumferential surface of the first pipe connector 4 and the inner wall of the flexible pipe 6.

The first sealing ring 7 is a component configured for further sealing the gap between the inner wall of the flexible pipe 6 and the outer circumferential surface of the first pipe connector 4. The first sealing ring 7 is made of an elastic material, such as rubber.

The inner wall of the flexible pipe 6 cooperates with the outer circumferential surface of the first pipe connector 4 to squeeze the first sealing ring 7, and the first sealing ring 7 seals the gap between the inner wall of the flexible pipe 6 and the outer circumferential surface of the first pipe connector 4 to further improve the sealing effect.

According to some embodiments of the present application, as shown in FIG. 7, a stop portion 42 is further disposed on the outer circumferential surface of the first pipe connector 4, and the first sealing ring 7 is located between the annular protrusion 41 and the stop portion 42 to limit axial movement of the first sealing ring 7 along the first pipe connector 4.

The stop portion 42 is a protrusion disposed along the outer circumferential surface of the first pipe connector 4, and an outer circumferential surface of the stop portion 42 is not a conical surface. Optionally, the stop portion 42 is an annular protrusion 41, or the stop portion 42 includes dotted protrusions arranged at intervals along the circumferential direction of the first pipe connector 4.

The stop portion 42 prevents the axial movement or deformation of the first sealing ring 7 along the first pipe connector 4, and ensures sealing performance between the first pipe connector 4 and the flexible pipe 6.

According to some embodiments of the present application, as shown in FIGs. 7 and 8, the plurality of annular protrusions 41 include a first annular protrusion 41a and a second annular protrusion 41b, and the distance between the first annular protrusion 41a and the first thermal management component 31 is greater than that between the second annular protrusion 41b and the first thermal management component 31; and the stop portion 42 is located between the first annular protrusion 41a and the second annular protrusion 41b.

The first annular protrusion 41a is one of the plurality of annular protrusions 41 that is relatively far away from the first thermal management component 31, namely, the first annular protrusion 41a is closer to an end, far away from the first thermal management component 31, of the first pipe connector 4 than other annular protrusions 41.

The first sealing ring is limited between the first annular protrusion 41a and the stop portion 42, and the stop portion 42 is located at a position relatively far away from the first thermal management component 31 in the axial direction of the first pipe connector 4, thereby preventing reduction of the sealing performance due to inadequate sheathing of the first end portion 61 of the flexible pipe 6.

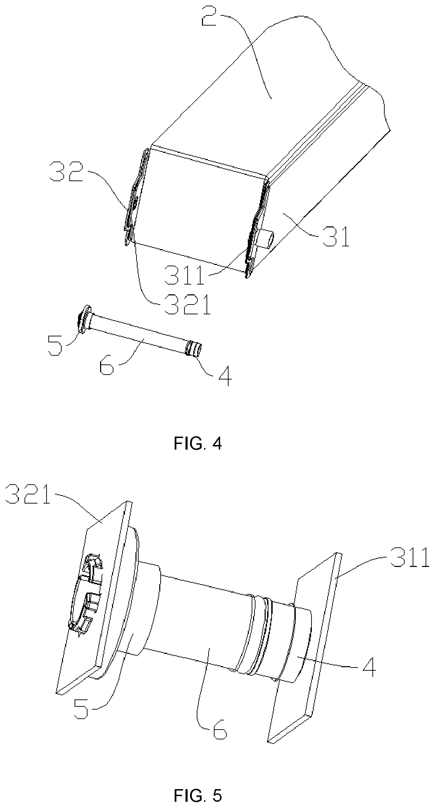

According to some embodiments of the present application, as shown in FIGs. 4 and 7, the first thermal management component 31 includes a first wall 311, the first wall 311 is provided with a first through hole 312, and the first pipe connector 4 is welded to the first wall 311 and is in communication with the first through hole 312.

The first thermal management component 31 includes a shell with an internal space, the first wall 311 is a portion of the shell, and the first through hole 312 is in communication with the internal space of the first thermal management component 31.

Compared with the existing technologies in which a male connector is disposed on the first thermal management component 31 which is then connected to a pipe through a female connector, the first wall 311 is provided with the first through hole 312 and the first pipe connector 4 connected to the flexible pipe 6 is inserted and fixed in the first through hole 312 in this embodiment of the present application, whereby the structure of the first thermal management component 31 is simplified, and the first thermal management component 31 and the second thermal management component 32 can be connected inside the narrow battery 100.

According to some embodiments of the present application, as shown in FIGs. 4 and 7, the second thermal management component 32 includes a second wall 321, the second wall 321 is provided with a second through hole 322, and the second pipe connector 5 is detachably connected to the second wall 321 and is in communication with the second through hole 322.

The second thermal management component includes a shell with an internal space, the second wall 321 is a portion of the shell, and the second through hole 322 is in communication with the internal space of the second thermal management component 32. Optionally, the first thermal management component 31 and the second thermal management component 32 have the same structure, that is, the first thermal management component 31 has a first wall 311 and a second wall 321 that are opposite, the second thermal management component 32 also has a first wall 311 and a second wall 321 that are opposite, the first wall 311 of the first thermal management component 31 faces the second thermal management component 32, and the second wall 321 of the second thermal management component 32 faces the first thermal management component 31.

Compared with the existing technologies in which a male connector is disposed on the second thermal management component 32 which is then connected to a pipe through a female connector, the second wall 321 is provided with the second through hole 322 and the second pipe connector 5 connected to the flexible pipe 6 is inserted and fixed in the second through hole 322 in this embodiment of the present application, whereby the structure of the second thermal management component 32 is simplified, and the first thermal management component 31 and the second thermal management component 32 can be connected inside the narrow battery 100.

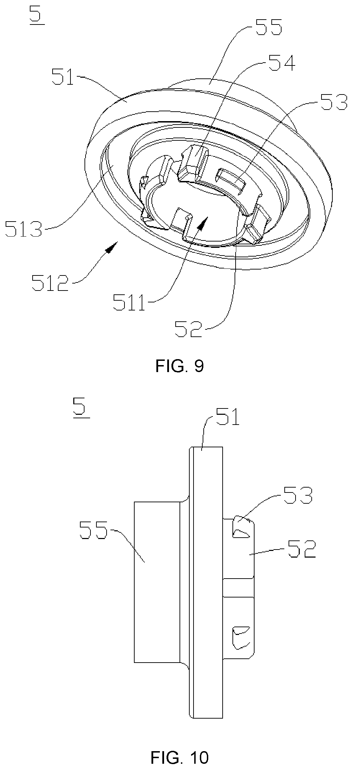

According to some embodiments of the present application, as shown in FIGs. 7 and 9, a buckle 53 is disposed at one end of the second pipe connector 5, and the buckle 53 is clamped to an inner surface of the second wall 321 to limit the second pipe connector 5 from detaching from the second wall 321.

The buckle 53 is formed at one end of the second pipe connector 5, and is a convex structure protruding from the circumferential direction of the second pipe connector 5 in a radial direction of the second pipe connector 5.

The buckle 53 limits the second pipe connector 5 from detaching from the second wall 321, ensures stable connection between the second thermal management component 32 and the second pipe connector 5, and then ensures that the flexible pipe 6 is in a stable state, so that the flexible pipe 6 and the first pipe connector 4 are connected stably.

According to some embodiments of the present application, as shown in FIGs. 7 and 9, the second pipe connector 5 includes a body 51 and a plurality of connecting arms 52, the body 51 abuts against the outer surface of the second wall 321, the body 51 has a third through hole 511 in communication with the second through hole 322, the plurality of connecting arms 52 are located inside the second through hole 322 and spaced along the circumferential direction of the second through hole 322, one end of each connecting arm 52 is connected to the body 51, and the other end of each connecting arm 52 is provided with a buckle 53.

As shown in FIGs. 9 and 10, the body 51 is of a disc-like structure, the third through hole 511 penetrates the disc-like structure, the plurality of connecting arms 52 are disposed on one side of the body 51, and the plurality of connecting arms 52 surround the third through hole 511; one end of each connecting arm 52 is a fixed end, and the other end is a free end; the fixed end is connected to the body 51, and the free end extends in the axial direction of the second pipe connector 5; and the buckle 53 is a protrusion formed on the connecting arm 52.

The second pipe connector 5 includes the body 51 and the plurality of connecting arms 52, and the plurality of connecting arms 52 can be inserted in the second through hole 322 to connect the body 51 and the second wall 321 and connect the second through hole 322 and the third through hole 511. The plurality of connecting arms 52 are all inserted inside the second through hole 322, so that the buckles 53 located on the connecting arms 52 fit with the inner surface of the second wall 321 to achieve a limiting effect, prevent the connecting arms 52 from detaching from the second through hole 322, and ensure the stability of connection between the second pipe connector 5 and the second thermal management component 32.

On the other hand, the plurality of connecting arms 52 can further converge towards the center to facilitate the insertion into the second through hole 322 or exit from the second through hole 322, so as to facilitate the assembly and disassembly of the second pipe connector 5.

Optionally, the plurality of connecting arms 52 elastically abut against the inner wall of the second through hole 322 to increase friction between the surface of the plurality of connecting arms 52 and the inner wall of the second through hole 322, so that the second pipe connector 5 is unlikely to move in the second through hole 322, and the second pipe connector 5 is further positioned. On the other hand, the plurality of connecting arms elastically abut against the inner wall of the second through hole 322, which can also ensure fit between the buckles 53 and the inner surface of the second wall 321.

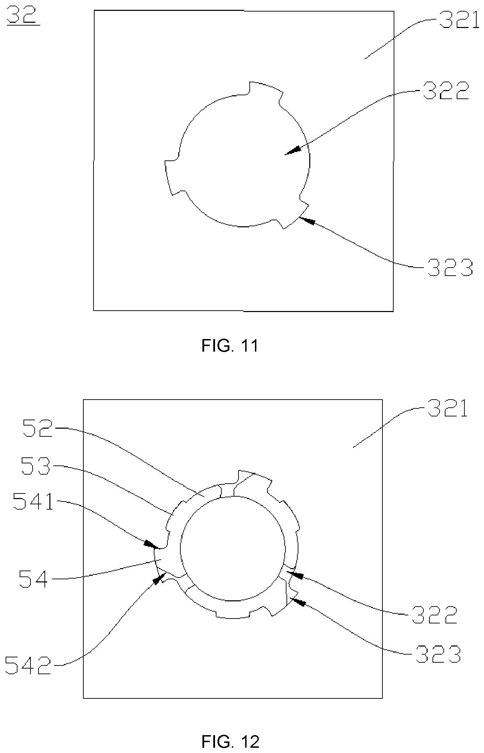

According to some embodiments of the present application, as shown in FIG. 11, a limit groove 323 is further disposed on the second wall 321, and the limit groove 323 is recessed from a wall of the second through hole 322 towards a direction away from a centerline of the second through hole 322. As shown in FIG. 12, the connecting arm 52 is further provided with a limit protrusion 54, and the limit protrusion 54 is embedded in the limit groove 323 to limit circumferential rotation of the second pipe connector 5.

As shown in FIG. 11, "the limit groove is recessed from a wall of the second through hole 322 towards a direction away from a centerline of the second through hole 322" indicates that the limit groove 323 is recessed from the wall of the second through hole 322 in the radial direction of the second through hole 322.

The limit protrusion 54 refers to a protrusion formed on the surface of the connecting arm 52 to fit with the limit groove 323.

The limit protrusion and the limit groove 323 prevent the circumferential rotation of the second pipe connector 5 within the second through hole 322, avoid loosening the connection between the flexible pipe 6 and the second pipe connector 5, avoid poor circulation caused by torsion of the flexible pipe 6, and prevent the connection between the flexible pipe 6 and the first pipe connector 4 from loosening due to the torsion of the flexible pipe 6, thereby improving the stability of connection between the first thermal management component 31 and the second thermal management component 32.

According to some embodiments of the present application, as shown in FIG. 12, the limit protrusion 54 includes a stop surface 541 and a guide slope 542, the stop surface 541 is configured to cooperate with the limit groove 323 to limit rotation of the second pipe connector 5 in a first direction, and the guide slope 542 is configured to allow the second pipe connector 5 to rotate in a second direction, so that the connecting arm 52 is squeezed by the wall of the second through hole 322 to deform, and the buckle 53 detaches from the second wall 321, where the first direction and the second direction are opposite directions along the circumferential direction of the second pipe connector 5.

Both the first direction and the second direction are along the circumferential direction of the second pipe connector 5, one of the first direction and the second direction is a clockwise direction of the second pipe connector 5, and the other of the first direction and the second direction is a counterclockwise direction of the second pipe connector 5. The stop surface 541 and the guide slope 542 are two opposite surfaces of the limit protrusion 54, the stop surface 541 faces the first direction, and the guide slope 542 faces the second direction.

The stop surface 541 and the guide slope 542 are disposed on the limit protrusion 54, so that the second pipe connector 5 will not rotate freely, and when external force of a magnitude is applied to the second pipe connector 5 and the second pipe connector 5 rotates towards the second direction, the plurality of connecting arms 52 can converge towards the center by squeezing the guide slope 542 of each connecting arm 52, then the buckle 53 on the connecting arm 52 detaches from the second wall 321, the second pipe connector 5 can be pulled out along its axis, and the second pipe connector 5 can be conveniently disassembled.

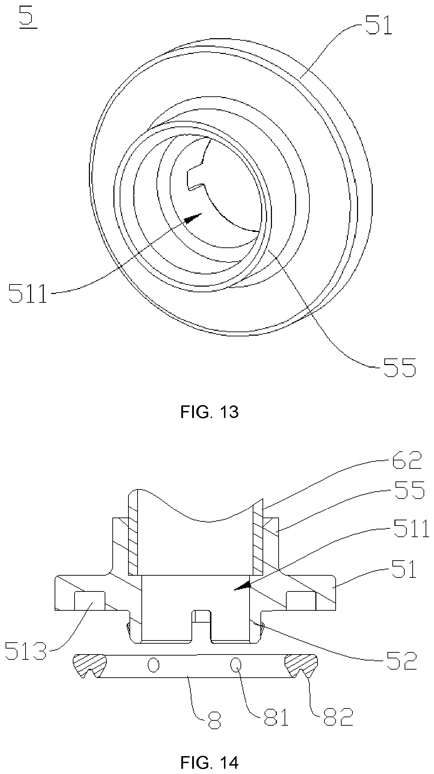

According to some embodiments of the present application, as shown in FIGs. 7 and 13, the second thermal management component 32 further includes a sleeve portion 55, the sleeve portion 55 extends from the body 51 towards a direction away from the second wall 321, and the second end portion 62 is inserted into the sleeve portion 55.

As shown in the figures, one end of the sleeve portion is connected to a side, away from the second wall 321, of the body 51, and the other end of the sleeve portion 55 extends towards the flexible pipe 6 and is sheathed on the second end portion 62 of the flexible pipe 6.

The sleeve portion 55 is disposed on the second surface to facilitate connection with the flexible pipe 6, and the sleeve portion 55 is located outside the flexible pipe 6, rather than inside the flexible pipe 6, to protect the second end portion 62 and prevent damage to a junction of the flexible pipe 6 and the second pipe connector 5.

According to some embodiments of the present application, as shown in FIG. 14, the sleeve portion 55 is coaxial with the third through hole 511, an inner diameter of the sleeve portion 55 is greater than a diameter of the third through hole 511, and an end surface of the second end portion 62 abuts against the side, away from the second wall 321, of the body 51.

"The sleeve portion 55 is coaxial with the third through hole" indicates that the axis of the sleeve portion 55 coincides with the axis of the third through hole 511. The inner diameter of the sleeve portion 55 is greater than the diameter of the third through hole 511, so that the inner wall of the sleeve portion 55 and the wall of the third through hole 511 define an annular surface on the side, away from the second wall 321, of the body 51, where the annular surface is configured for positioning the second end portion 62 of the flexible pipe 6.

Through the above settings, on the one hand, the positioning accuracy of the flexible pipe 6 is improved, and on the other hand, the end surface of the second end portion 62 will not block the flowing of the heat exchange medium, so as to avoid reducing the flow rate of the heat exchange medium and improve the heat exchange efficiency.

Optionally, the second pipe connector 5 and the sleeve portion 55 are bonded together using an adhesive to improve the connection stability of the second pipe connector 5 and the second end portion 62.

According to some embodiments of the present application, the sleeve portion 55 and the second end portion 62 are welded.

A way of welding is hot-melt welding or laser welding, so that an inner circumferential surface of the sleeve portion 55 and an outer circumferential surface of the second end portion 62 are hot-melted into a whole.

By welding the sleeve portion 55 and the second end portion, the connection stability of the second pipe connector 5 and the second end portion 62 can be improved, the gap between the inner circumferential surface of the sleeve portion 55 and the outer circumferential surface of the second end portion 62 can be eliminated, and connection sealing performance of the second pipe connector 5 and the second end portion 62 can be improved.

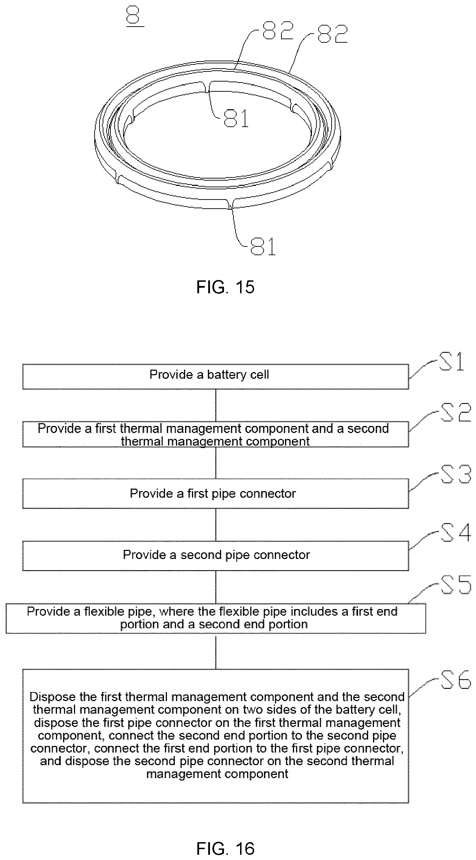

According to some embodiments of the present application, as shown in FIGs. 14 and 15, the battery 100 further includes a second sealing ring 8, the second sealing ring 8 is located between the body 51 and the second wall 321, and the second sealing ring 8 is configured for sealing a gap between the body 51 and the second wall 321.

The second sealing ring 8 is made of an elastic material, such as rubber. The body 51 cooperates with the second wall 321 to squeeze the second sealing ring 8, so that the second sealing ring 8 forms an annular sealing area between the body 51 and the second wall 321.

The second sealing ring 8 is disposed to close the gap between the body 51 and the second wall 321, which improves the sealing performance of the second pipe connector 5 and the second thermal management component 32.

According to some embodiments of the present application, as shown in FIGs. 14 and 15, the body 51 has a first surface 512 facing the second wall 321, an annular groove 513 is provided on the first surface 512, and the second sealing ring 8 is disposed in the annular groove 513; and a plurality of convex portions 81 are provided on an inner and/or outer circumferential surface of the second sealing ring 8, and the plurality of convex portions 81 are spaced along a circumferential direction of the second sealing ring 8 to ensure interference fit between the second sealing ring 8 and the annular groove 513.

The annular groove 513 is axially recessed from the first surface along the second pipe connector 5. The second sealing ring 8 is disposed in the annular groove 513, and an inner ring side wall and outer ring side wall of the annular groove 513 cooperate to clamp the second sealing ring 8 to limit detachment of the second sealing ring 8 from the annular groove 513.

The plurality of convex portions 81 on the inner circumferential surface of the second sealing ring 8 abut against the inner ring side wall of the annular groove 513, and the plurality of convex portions 81 on the outer circumferential surface of the second sealing ring 8 abut against the outer ring side wall of the annular groove 513, so that the second sealing ring 8 is in interference fit with the annular groove 513. There is also room for deformation of the second sealing ring 8 between the two adjacent convex portions 81, so that the second sealing ring 8 can be squeezed to deform between the two adjacent convex portions 81.

By configuring the plurality of convex portions 81 to achieve the interference fit between the second sealing ring 8 and the annular groove 513, on the one hand, the position of the second sealing ring 8 is fixed and not easily misaligned; on the other hand, the second sealing ring 8 can be first assembled on the body 51 and then abuts against the second wall 321 to facilitate the assembly; and on the further hand, the second sealing ring 8 can be squeezed by the second wall 321 to deform, which facilitates the assembly of the second pipe connector 5 and the second heat management component 32 and achieves sealing.

Optionally, at least two convex rings 82 are formed on a surface, facing the second wall 321, of the second sealing ring 8, and two adjacent convex rings 82 are spaced. As the at least two convex rings 82 are spaced, compared with the surface, facing the second wall 321, of the second sealing ring 8 being a whole plane or arc surface, the two spaced convex rings 82 are more prone to deformation to form two spaced annular sealing areas with better sealing performance.

According to some embodiments of the present application, as shown in FIG. 3, the first thermal management component 31 and the second thermal management component 32 are disposed opposite on two sides of at least one battery cell 2.

The first thermal management component 31 and the second thermal management component are both flat, the first thermal management component 31 and the second thermal management component 32 each have two opposite walls, a space for accommodating fluid is formed between the two opposite walls, and the first pipe connector 4 or the second pipe connector 5 may be disposed on the two opposite walls separately.

The first pipe connector 4 is disposed on a side, facing the second thermal management component 32, of the first thermal management component 31, while the second pipe connector 5 is disposed on a side, facing the first thermal management component 31, of the second thermal management component 32. Optionally, the first thermal management component 31 and the second thermal management component 32 have the same structure, that is, the first thermal management component 31 has the second pipe connector 5 on the side away from the second thermal management component 32, so as to connect another thermal management component 3 or connect an external power apparatus through a pipeline; and the second thermal management component 32 has the first pipe connector 4 on the side away from the first thermal management component 31, so as to connect another thermal management component 3 or connect an external power apparatus through a pipeline.

The first thermal management component and the second thermal management component 32 are in contact with the two opposite sides of the battery cell 2 to effectively increase the heat exchange area of the battery cell 2, thereby improving heat exchange efficiency, alleviating a problem of uneven temperature of the battery cell 2 due to small heat exchange area, and improving thermal performance of the battery cell.

On the other hand, when the first thermal management component 31 and the second thermal management component 32 are attached to the two opposite sides of the battery cell 2 separately, the spacing distance between the first thermal management component 31 and the second thermal management component 32 may be short. In the embodiments of the present application, the connection structure of the first thermal management component 31 and the second thermal management component 32 is simplified, and the first thermal management component 31 and the second thermal management component 32 can be connected in a relatively narrow space, so the first pipe connector 4, the second pipe connector 5, and the flexible pipe 6 can be disposed between the two opposite surfaces of the first thermal management component 31 and the second thermal management component 32. The first pipe connector 4 may be disposed on the first thermal management component 31 in advance, the second pipe connector 5 is connected to the second end portion 62, then the first end portion 61 is connected to the first pipe connector 4, and the second pipe connector 5 is retracted by bending the flexible pipe 6 and connected to the second thermal management component 32, thereby alleviating a problem of inconvenient connection due to small spacing between the first thermal management component 31 and the second thermal management component 32, achieving the connection between the first thermal management component 31 and the second thermal management component 32 without occupying additional internal space of the battery, and ensuring a high energy density of the battery.

According to some embodiments of the present application, as shown in FIGs. 2 and 3, the battery cell 2 includes a first side surface and a second side surface that are opposite, the first side surface and the second side surface are surfaces of two sides of the battery cell 2 with the largest area, the first side surface is in contact with the first thermal management component, and the second side surface is in contact with the second thermal management component.

The battery cell 2 includes a first side surface, a second side surface, a third side surface, a fourth side surface, a fifth side surface, and a sixth side surface, where the third side surface, the fourth side surface, the fifth side surface, and the sixth side surface are sequentially connected end to end; the first side surface and the second side surface are opposite and connected to the third side surface, the fourth side surface, the fifth side surface, and the sixth side surface; the area of the first side surface is greater than that of any of the third side surface, the fourth side surface, the fifth side surface, and the sixth side surface, and the area of the second side surface is greater than that of any of the third side surface, the fourth side surface, the fifth side surface, and the sixth side surface, that is, the first side surface and the second side surface are larger surfaces of the battery cell 2, and the larger surfaces of the battery cell 2 are perpendicular to the thickness of the battery cell 2. Optionally, the first thermal management component 31 is attached to the first side surface, and the second thermal management component 32 is attached to the second side surface.

The first thermal management component 31 and the second thermal management component 32 are attached to the large surfaces of the battery cell 2 separately, so that the temperature adjustment of each portion of the battery cell 2 tends to be the same to ensure a balanced internal temperature of the battery cell 2, thereby improving the performance and safety of the battery cell 2.

On the other hand, when the first thermal management component 31 and the second thermal management component 32 are attached to the large surfaces of the battery cell 2 separately, the spacing distance between the first thermal management component 31 and the second thermal management component 32 is the thickness of the battery cell 2, and the low thickness of the battery cell 2 results in the short spacing distance between the first thermal management component 31 and the second thermal management component 32. In the technical solution provided in the present application, the first pipe connector 4 may be disposed on the first thermal management component 31 in advance, the second pipe connector 5 is connected to the second end portion 62, then the first end portion 61 is connected to the first pipe connector 4, and the second pipe connector 5 is retracted by bending the flexible pipe 6 and connected to the second thermal management component 32, thereby alleviating a problem of inconvenient connection due to the small spacing between the first thermal management component 31 and the second thermal management component 32.

In a second aspect, an embodiment of the present application provides an electrical device, such as the vehicle 1000 shown in FIG. 1. The electrical device includes the foregoing battery 100.

The battery 100 of the electrical device has good heat dissipation and low temperature rise during operation, so the battery 100 has stable performance and high safety, and the performance of the electrical device is stable.

In a third second aspect, an embodiment of the present application provides a manufacturing method for a battery 100, as shown in FIG. 16. FIG. 16 illustrates a schematic flowchart of a manufacturing method for a battery 100 according to some embodiments of the present application. The manufacturing method includes:
S1: Provide a battery cell 2;
S2: Provide a first thermal management component 31 and a second thermal management component 32, where both the first thermal management component 31 and the second thermal management component 32 are configured for accommodating fluid to adjust the temperature of the battery cell 2;
S3: Provide a first pipe connector 4;
S4: Provide a second pipe connector 5;
S5: Provide a flexible pipe 6, where the flexible pipe 6 includes a first end portion 61 and a second end portion 62; and
S6: Dispose the first thermal management component 31 and the second thermal management component 32 opposite on two sides of the battery cell 2, connect the first pipe connector 4 to the first thermal management component 31, connect the second pipe connector 5 to the second end portion 62, connect the first end portion 61 to the first pipe connector 4, and connect the second pipe connector 5 to the second thermal management component 32, so as to connect the first thermal management component 31 and the second thermal management component 32.

It should be noted that the relevant structure of the battery 100 manufactured by the foregoing manufacturing method for the battery 100 may be referenced to the battery 100 provided in the foregoing embodiments.

When the battery 100 is assembled based on the foregoing manufacturing method for the battery 100, it is not necessary to follow the foregoing steps in sequence. That is, the steps may be performed in order mentioned in the embodiment, different from the order mentioned in the embodiment, or several steps may be performed simultaneously. For example, steps S1, S2, S3, S4, and S5 may be performed in any order or simultaneously.

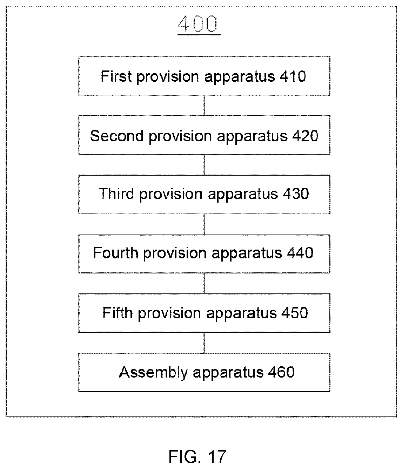

In a fourth aspect, an embodiment of the present application provides a manufacturing device 400 for a battery 100, as shown in FIG. 17. FIG. 17 illustrates a schematic block diagram of a manufacturing device 400 for a battery 100 according to some embodiments of the present application. The manufacturing device 400 includes a first provision apparatus 410, a second provision apparatus 420, a third provision apparatus 430, a fourth provision apparatus 440, a fifth provision apparatus 450, and an assembly apparatus 460.

The first provision apparatus 410 is configured to provide a battery cell 2.

The second provision apparatus 420 is configured to provide a first thermal management component 31 and a second thermal management component 32, where both the first thermal management component 31 and the second thermal management component 32 are configured for accommodating fluid to adjust the temperature of the battery cell 2.

The third provision apparatus 430 is configured to provide a first pipe connector 4.

The fourth provision apparatus 440 is configured to provide a second pipe connector 5.

The fifth provision apparatus 450 is configured to provide a flexible pipe 6, where the flexible pipe 6 includes a first end portion 61 and a second end portion 62.

The assembly apparatus 460 is configured to dispose the first thermal management component 31 and the second thermal management component 32 opposite on two sides of the battery cell 2, connect the first pipe connector 4 to the first thermal management component 31, connect the second pipe connector 5 to the second end portion 62, connect the first end portion 61 to the first pipe connector 4, and connect the second pipe connector 5 to the second thermal management component 32, so as to connect the first thermal management component 31 and the second thermal management component 32.

The relevant structure of the battery 100 manufactured by the foregoing manufacturing device 400 may be referenced to the battery 100 provided in the foregoing embodiments.

It should be noted that the embodiments in the present application and the features of the embodiments may be combined with each other on a non-conflict basis.

According to some embodiments of the present application, with reference to FIGs. 2-7, an embodiment of the present application provides a battery 100. The battery 100 includes a plurality of thermal management components 3 and a plurality of battery cells 2 disposed in rows, and the two adjacent thermal management components 3 are disposed opposite on two sides of one battery cell 2. That is, when a quantity of the battery 100 is n, a quantity of the thermal management components 3 is n+1. The thermal management components 3 on the two sides of each battery cell 2 are the first thermal management component 31 and the second thermal management component 32 separately, and both the first thermal management component 31 and the second thermal management component 32 are configured for accommodating fluid to adjust the temperature of the battery cell 2. The battery cell 2 includes a first surface 512, a second surface, a third surface, a fourth surface, a fifth surface, and a sixth surface, where the first surface 512, the second surface, the third surface, and the fourth surface are sequentially connected end to end; the fifth surface and the sixth surface are opposite and connected to the first surface 512, the second surface, the third surface, and the fourth surface; the area of the fifth surface and the area of the sixth surface are separately greater than that of any of the first surface 512, the second surface, the third surface, and the fourth surface; the first thermal management component 31 is attached to the fifth surface; and the second thermal management component 32 is attached to the sixth surface. The battery 100 further includes a first pipe connector 4, a second pipe connector 5, and a flexible pipe 6, where one end of the first pipe connector 4 is connected to the first thermal management component 31, one end of the second pipe connector 5 is connected to the second thermal management component 32, the flexible pipe 6 includes a first end portion 61 and a second end portion 62, the first end portion 61 is connected to the other end of the first pipe connector 4, and the second end portion 62 is connected to the other end of the second pipe connector 5, so as to connect the first thermal management component 31 and the second thermal management component 32.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery, comprising:
at least one battery cell;
a first thermal management component and a second thermal management component, both configured for accommodating fluid to adjust temperature of the at least one battery cell;
a first pipe connector, with one end connected to the first thermal management component;
a second pipe connector, with one end connected to the second thermal management component; and
a flexible pipe, comprising a first end portion and a second end portion, wherein the first end portion is connected to the other end of the first pipe connector, and the second end portion is connected to the other end of the second pipe connector, so as to communicate the first thermal management component and the second thermal management component.

2. The battery according to claim 1, wherein the first end portion is sheathed on the first pipe connector, and is in interference fit with the first pipe connector.

3. The battery according to claim 1 or 2, wherein an annular protrusion extending along a circumferential direction of the first pipe connector is disposed on an outer circumferential surface of the first pipe connector, and the annular protrusion abuts against an inner wall of the flexible pipe.

4. The battery according to claim 3, wherein an outer diameter of the annular protrusion gradually decreases in a direction from the first thermal management component to the second thermal management component.

5. The battery according to claim 3 or 4, wherein a plurality of annular protrusions are disposed on the outer circumferential surface of the first pipe connector, and the plurality of annular protrusions are spaced in an axial direction of the first pipe connector.

6. The battery according to any one of claims 3-5, further comprising:
a first sealing ring, sheathed on the first pipe connector so as to seal a gap between the outer circumferential surface of the first pipe connector and the inner wall of the flexible pipe.

7. The battery according to claim 6, wherein a stop portion is further disposed on the outer circumferential surface of the first pipe connector, and the first sealing ring is located between the annular protrusion and the stop portion, so as to limit axial movement of the first sealing ring along the first pipe connector.

8. The battery according to claim 7, wherein the plurality of annular protrusions comprise a first annular protrusion and a second annular protrusion, and a distance between the first annular protrusion and the first thermal management component is greater than that between the second annular protrusion and the first thermal management component; and the stop portion is located between the first annular protrusion and the second annular protrusion.

9. The battery according to any one of claims 1-8, wherein the first thermal management component comprises a first wall, the first wall is formed with a first through hole, and the first pipe connector is welded to the first wall and is in communication with the first through hole.

10. The battery according to any one of claims 1-9, wherein the second thermal management component comprises a second wall, the second wall is formed with a second through hole, and the second pipe connector is detachably connected to the second wall and is in communication with the second through hole.

11. The battery according to claim 10, wherein a buckle is disposed at one end of the second pipe connector, and the buckle is clamped to an inner surface of the second wall, so as to limit the second pipe connector from detaching from the second wall.

12. The battery according to claim 11, wherein the second pipe connector comprises a body and a plurality of connecting arms, the body abuts against an outer surface of the second wall, the body has a third through hole in communication with the second through hole, the plurality of connecting arms are located inside the second through hole and spaced along a circumferential direction of the second through hole, one end of each connecting arm is connected to the body, and the other end of each connecting arm is provided with the buckle.

13. The battery according to claim 12, wherein a limit groove is further disposed on the second wall, the limit groove is recessed from a wall of the second through hole towards a direction away from a centerline of the second through hole, the connecting arm is further provided with a limit protrusion, and the limit protrusion is embedded in the limit groove, so as to limit circumferential rotation of the second pipe connector.

14. The battery according to claim 13, wherein the limit protrusion comprises a stop surface and a guide slope, the stop surface is configured to cooperate with the limit groove to limit rotation of the second pipe connector in a first direction, and the guide slope is configured to allow the second pipe connector to rotate in a second direction, so that the connecting arm is squeezed by the wall of the second through hole to deform, and the buckle detaches from the second wall, wherein the first direction and the second direction are opposite directions along the circumferential direction of the second pipe connector.

15. The battery according to any one of claims 12-14, wherein the second pipe connector further comprises a sleeve portion, the sleeve portion extends from the body towards a direction away from the second wall, and the second end portion is inserted into the sleeve portion.

16. The battery according to claim 15, wherein the sleeve portion is coaxial with the third through hole, an inner diameter of the sleeve portion is greater than a diameter of the third through hole, and an end surface of the second end portion abuts against a side, away from the second wall, of the body.

17. The battery according to claim 15 or 16, wherein the sleeve portion and the second end portion are welded.

18. The battery according to any one of claims 12-17, further comprising:
a second sealing ring, wherein the second sealing ring is located between the body and the second wall, and the second sealing ring is configured for sealing a gap between the body and the second wall.

19. The battery according to claim 18, wherein the body has a first surface facing the second wall, an annular groove is provided on the first surface, and the second sealing ring is disposed in the annular groove; and
a plurality of convex portions are provided on an inner and/or outer circumferential surface of the second sealing ring, and the plurality of convex portions are spaced along a circumferential direction of the second sealing ring to ensure interference fit between the second sealing ring and the annular groove.

20. The battery according to any one of claims 1-19, wherein the first thermal management component and the second thermal management component are disposed opposite on two sides of the at least one battery cell.

21. The battery according to claim 20, wherein the battery cell comprises a first side surface and a second side surface that are opposite, the first side surface and the second side surface are surfaces of two sides of the battery cell with the largest area, the first side surface is in contact with the first thermal management component, and the second side surface is in contact with the second thermal management component.

22. An electrical device, comprising the battery according to any one of claims 1-21.

23. A manufacturing method for a battery, comprising:
providing at least one battery cell;
providing a first thermal management component and a second thermal management component, wherein both the first thermal management component and the second thermal management component are configured for accommodating fluid to adjust the temperature of the at least one battery cell;
providing a first pipe connector;
providing a second pipe connector;
providing a flexible pipe, wherein the flexible pipe comprises a first end portion and a second end portion; and
disposing the first thermal management component and the second thermal management component opposite on two sides of the battery cell, connecting one end of the first pipe connector to the first thermal management component, connecting one end of the second pipe connector to the second end portion, connecting the first end portion to the other end of the first pipe connector, and connecting the other end of the second pipe connector to the second thermal management component, so as to communicate the first thermal management component and the second thermal management component.

24. A manufacturing device for a battery, comprising:
a first provision apparatus, configured to provide at least one battery cell;
a second provision apparatus, configured to provide a first thermal management component and a second thermal management component, wherein both the first thermal management component and the second thermal management component are configured for accommodating fluid to adjust the temperature of the at least one battery cell;
a third provision apparatus, configured to provide a first pipe connector;
a fourth provision apparatus, configured to provide a second pipe connector;
a fifth provision apparatus, configured to provide a flexible pipe, wherein the flexible pipe comprises a first end portion and a second end portion; and
an assembly apparatus, configured to dispose the first thermal management component and the second thermal management component opposite on two sides of the battery cell, connect one end of the first pipe connector to the first thermal management component, connect one end of the second pipe connector to the second end portion, connect the first end portion to the other end of the first pipe connector, and connect the other end of the second pipe connector to the second thermal management component, so as to communicate the first thermal management component and the second thermal management component.
